Europäisches Patentamt

(19) European Patent Office

Office européen des brevets

(11) Publication number: **0 130 049**
**B1**

(12) **EUROPEAN PATENT SPECIFICATION**

(45) Date of publication of patent specification: **04.01.89**

(21) Application number: **84304199.7**

(22) Date of filing: **21.06.84**

(51) Int. Cl.⁴: **H 01 M 4/02, H 01 M 2/14,**
**H 01 M 6/14, H 01 M 4/38,**
**H 01 M 6/00, H 01 M 10/36,**
**C 01 D 15/04, C 25 D 9/04,**
**B 05 C 1/04**

(54) **Coatings for electrochemical electrodes and methods of making the same.**

(30) Priority: **27.06.83 US 507752**

(43) Date of publication of application:
**02.01.85 Bulletin 85/01**

(45) Publication of the grant of the patent:
**04.01.89 Bulletin 89/01**

(84) Designated Contracting States:
**AT BE CH DE FR GB IT LI LU NL SE**

(56) References cited:
**CH-A- 545 659**
**US-A-3 528 856**
**US-A-3 615 835**
**US-A-4 359 818**

**GMELINS HANDBUCH DER ANORGANISCHEN
CHEMIE, 8 ed., system no. 20, "Lithium" 1927,
VERLAG CHEMIE GmbH, Berlin, pages 242, 243**

**GMELINS HANDBUCH DER ANORGANISCHEN
CHEMIE, 8. ed., system no. 21, "Natrium", 1928,
VERLAG CHEMIE GmbH, Berlin, pages 882-884**

(73) Proprietor: **Voltaix, Incorporated**
**197 Meister Avenue**
**North Branch, NJ 08876 (US)**

(72) Inventor: **Deneufville, John Peter**
**Indian Hollow Road R.D. 1**
**Mendham New Jersey 07945 (US)**
Inventor: **Rajoria, Dalbir**
**22, Holly Glen Road Apt. 52B**
**Somerville New Jersey 08876 (US)**
Inventor: **Ovshinsky, Stanford Robert**
**2700 Squirrel Road**
**Bloomfield Hills Michigan 48013 (US)**

(74) Representative: **Skone James, Robert Edmund
et al
GILL JENNINGS & EVERY 53-64 Chancery Lane
London WC2A 1HN (GB)**

(56) References cited:
**GMELINS HANDBUCH DER ANORGANISCHEN
CHEMIE, 8. ed., system no. 22, "Kalium", 1938,
VERLAG CHEMIE GmbH, Berlin, pages 977-979**

Courier Press, Leamington Spa, England.

# EP 0 130 049 B1

**Description**

The present invention is directed generally to electrochemical cells having an electrolyte and at least one electrode. More particularly, a coating is provided for the electrode which allows for the diffusion of an electrochemically active species through the coating during electrochemical release of the active species from the electrode or deposition of the active species onto the electrode while providing a substantially impervious barrier to the electrolyte. Electrodes utilizing the coatings described herein may be made with various active materials and used in cells over a wide range of operating temperatures to deliver better electrochemical performance compared to the prior art.

In an electrochemical cell, chemical energy is converted to electrical energy with a reduction in the free energy of the system. In the course of the cell reaction, negative charge leaves the anode, travels through the external driven circuit, and re-enters the cell at the cathode. Thus, the cathode is the positive electrode and the anode is the negative electrode. By virtue of the established electromotive series, it is possible to select suitable cathodes and anodes to obtain a desired theoretical voltage. The ideal cell would give the theoretical voltage under continued, constant load and the loss of free energy would manifest itself entirely as electrical energy outside the cell. However, this ideal is never attained in practice, because the internal resistance of the cell is not zero and the reactions within the cell never occur in a completely reversible manner. Moreover, incompatibility of the electrodes with each other or with the electrolyte, polarization, and other well-known problems prevent performance at theoretical values.

In particular, lithium has several properties which prove advantageous when used as an anode.

Lithium in equilibrium with lithium ions in various solvent systems affords very negative potentials, and thus it is readily possible to achieve cell voltages greater than three volts, using various oxide cathodic reactants, i.e., $MnO_2$. Because lithium has the lowest equivalent weight of any metal, the high cell voltages result in high energy per unit weight of cell. Lithium is reasonably stable in many nonaqueous electrolyte systems. This stability arises as a consequence of a chemical reaction between the lithium anode and the electrolyte, forming a passivating film at the interface which limits further reaction. Such films cause a number of problems which are discussed below.

Over the past decade, many battery companies and government laboratories have worked on the development of ambient temperature lithium batteries. Several primary lithium cells are now commercially available, although no secondary lithium cells have yet reached this stage.

In the field of primary cells, the Li-LiAlCl$_4$/SOCl$_2$-C system has been extensively investigated. This system has received particular attention because of its relatively high open-circuit voltage of 3.6 volts and high energy density of 500 W-hr/kg. Such lithium primary systems demonstrate very high energy densities. For example, the Li/SOCl$_2$ system exceeds 16—20 Wh/in$^3$, which represents an energy density ten times greater than the Lechanche primary type. In addition to the questionable safety of the cell, however, there are other problems which hinder the ability of these systems to achieve their great potential for commercial success.

Using lithium as an anode material poses significant problems. Although lithium has been used successfully in aqueous electrolytes for very high drain rate batteries in military application, more conventional applications require the use of aprotic solvents to achieve reasonable shelf life and coulombic efficiency at low discharge rates. Use of these solvents cause handling and safety problems for such cells.

Lithium cells using a nonaqueous electrolyte have ruptured during use even though the cells were built to contain the gas generated by the electrochemical reaction between these components. Excessive internal heating, sometimes associated with inadvertant short circuits or overdischarging, is one reported cause of such rupture.

High drain-rate lithium cells have encountered problems with thermal runaway initiated by the exothermic reaction between lithium and the electrolyte, particularly an aqueous electrolyte. Since lithium has a relatively low melting point and its reactivity greatly increases upon melting, high operating temperatures must be avoided.

Lithium cells with liquid cathodes based on sulfur-containing electrolytes have a particular problem with gas generated from the degradation of the electrolyte. Since the cells are sealed to prevent leakage of the electrolyte, the potential for the cell to rupture is dramatically increased.

Lithium cells operating at ambient temperature using liquid cathodes based on organic or inorganic electrolytes tend to suffer from a shortcoming known as voltage delay. This term describes a temporary voltage depression on load when cells are tested after extended periods of storage, especially at high temperature. This phenomenon results from lithium directly contacting a soluble depolarizer to form a passivating film at the anode surface. The factors controlling this delay in activation are not well understood. The passivation film is at least partially responsible for the chronic low rate capability that nearly all lithium battery systems suffer from.

The voltage delay phenomenon also plagues other types of cells. For example, in a magnesium dry cell a passivation film forms on the magnesium anode to limit corrosion. The cell is then unable to deliver full operating voltage after it is placed under load.

Attempts to solve the voltage delay phenomenon have generally concentrated upon additives to the electrolyte. Although some additives have reduced the effect of the voltage delay phenomenon, the voltage and overall electrochemical performance of the cell is significantly decreased.

2

An inconvenient and expensive method of avoiding the voltage delay phenomenon is to place a small rechargeable cell i.e. nickel cadmium cell, in parallel circuit with the passivated cell. The rechargeable cell provides the operating voltage until the passivated cell is capable of doing so.

Passivation films often form before the cell is assembled to limit the operating voltage of a cell unless current densities are used above a barrier value. For example, this problem is exhibited by titanium anodes used in electrolytic manganese dioxide processes. Sandblasting and chemical washes are treatments used in the attempt to remove the passivation film before the anode is used in the process.

Anode materials like lithium also are inherently rechargeable, i.e., lithium can be electrodeposited from lithium ion-containing electrolytes. One of the major problems limiting the successful development of rechargeable versions of lithium cells is the nature of the lithium deposit during the recharging of the cells. Past investigations indicate that lithium plating can occur in dendritic form lowering the cell's utilization efficiency and ultimately shorting the cell.

Attempts to prevent deleterious dendrite formation include alloying the lithium with other metals like aluminum. Electrolyte additives also have been used to promote surface alloy formation. Although cycle life of the cell improves, the power density of the cell significantly decreases. Other attempts employ cell separators, such as permeable membranes, to act as physical barriers to dendritic growth. Although cell separators are initially effective, lithium dendrites can eventually penetrate the cell separators and establish transient or permanent electronic shorts.

In order to increase the voltage generated by devices utilizing lithium metal, coatings or layers of lithium compound compositions have been used on the lithium metal contained in these devices. For example, U.S. Patent No. 3,528,856, discloses a high temperature voltage and current generating device including a layer of lithium metal which is coated by various lithium compound compositions, i.e., lithium oxide, lithium nitride, etc. The lithium metal, as coated, is useful for generating voltage and/or electrical power in response to the application of heat. Open circuit voltages of the order of 1.5 to 2.5 volts were observed when the device was exposed to high temperature.

An example of a lithium-air device which generates voltage by utilizing lithium compounds as a coating is disclosed in U.S. Patent No. 3,615,835. Various lithium compounds were used as a solid coating over lithium metal. The device operated at room temperature and was activated by exposure to water moisture which penetrated the coating to contact the lithium metal layer.

In accordance with a first aspect of the present invention, a coating for an electrode which coating electrochemically releases an active species to an electrolyte is characterised by a selectively permeable material which allows diffusion of said active species through the coating during operation of the cell while providing a substantially impervious barrier to the electrolyte.

In accordance with a second aspect of the present invention, an electrode for use in an electrochemical cell having an electrochemically active species and an electrolyte is characterised by means for storing said active species and subsequently discharging at least a portion of such stored active species to provide a supply of electrons; a surface adapted to be operatively associated with said electrolyte in the cell; and a coating according to the first aspect of the invention on the surface.

In accordance with a third aspect of the present invention, an electrochemical cell has an electrochemically active species; anode means for storing said active species and subsequently discharging at least a portion of such stored active species to provide a supply of electrons, said anode means having an operative surface; cathode means for providing diffusion of said active species between said anode means and said cathode means during operation of the cell, said cathode means operatively contacting said surface through a coating, said cathode means including an electrolyte; and a coating according to the first aspect of the invention on the surface.

In accordance with a fourth aspect of the present invention a method of making an electrode according to the second aspect of the invention is characterised by providing an electrode means for storing said active species and subsequently discharging at least a portion of such stored active species to provide a supply of electrons, said electrode having a surface adapted to be operatively associated with said electrolyte in the cell; and applying a coating according to the first aspect of the invention to the electrode surface.

In accordance with a fifth aspect of the present invention, apparatus for making an electrode for use in an electrochemical cell having an electrolyte, the electrode being made from a roll of a web of substrate with one or more electrode-forming regions thereon is characterised by means for unrolling said substrate substantially continuously into an application chamber, said chamber including at least one depositing region therein; means for depositing a coating according to the first aspect of the invention onto at least some of said one or more electrode-forming regions, said depositing means being positioned in said application chamber.

In accordance with the present invention, primary and secondary electrochemical cells having an electrolyte are fabricated using at least one electrode containing an electrochemically active species such as lithium. A coating is provided on the electrode which is particularly useful because it allows for diffusion of the active species through the coating to the electrolyte upon electrochemical release of the active species from the electrode or deposition of the active species onto the electrode and provides a substantially impervious barrier to the electrolyte.

The electrochemical cells described herein exhibit a wide operating temperature range with improved cell capacity at various discharge rates even at ambient temperatures. Improved rate capability for several cathodic reactants has also been achieved. With improved cell voltage and capacity, the cell is more efficient. In a more efficient cell, there is less power and heat dissipation. Thus, thermal runaway and rupturing of the cell is prevented.

The coating of the present invention provides protection against degradation of the electrode by the electrolyte during storage and increases the shelf life of the electrode. Cells are less prone to rupture because electrolyte degradation is decreased and less gas is generated during cycling.

The present invention includes a coating for an electrode for use in an electrochemical cell having an electrochemically active species and an electrolyte. The coating includes a selectively permeable material which allows for the diffusion of the active species through the coating during operation of the cell while providing a substantially impervious barrier to the electrolyte. The problems in prior primary and secondary cells as discussed above are obviated by the present invention, all with improved electrochemical performance of the cells.

The selectively permeable material includes an electrochemically active species and at least one electronegative element. Another component of the coating may be carbon or at least one amphoteric element.

In one embodiment, an electrode for use in an electrochemical cell having an electrochemically active species and an electrolyte includes means for storing said active species and subsequently discharging at least a portion of such stored active species to provide a supply of electrons. The electrode has a surface adapted to be operatively associated with the electrolyte in the cell. The electrode also includes a coating, as described above, on the electrode surface.

In another embodiment, an electrochemical cell is provided which includes an electrochemically active species and anode means for storing the active species and subsequently discharging at least a portion of such stored active species to provide a supply of electrons, the anode means has an operative surface. A coating, as described above, is provided on the surface. The cell further includes cathode means for providing diffusion of the active species between said anode means and said cathode means during operation of the cell. The cathode means operatively contacts the surface through the coating. The cathode means includes an electrolyte. Lithium is one preferred active species. A second preferred active species is hydrogen wherein the electrode includes means for storing hydrogen and subsequently discharging at least a portion of the stored hydrogen to provide a supply of electrons. Other suitable active species include sodium, potassium, magnesium, and calcium. The present invention also contemplates applications of the inventive concept to both primary and secondary cells, and batteries having a plurality of such cells.

A method of making an electrode for use in an electrochemical cell having an electrochemically active species and an electrode includes the steps of providing an electrode having means for storing said active species and subsequently discharging at least a portion of such stored active species to provide a supply of electrons. The electrode includes a surface adapted to be operatively associated with the electrolyte in the cell. The method further includes applying a coating, as described above, to the electrode surface. Preferably, application of the coating to the electrode surface takes place by either solution deposition, vapor deposition, or rapid quench techniques.

The solution techniques include physically coating the selectively permeable material onto the electrode surface, chemically reacting the coating to the electrode surface, and reactively electroplating the coating onto the electrode surface. The vapor deposition techniques include sputtering, reactive sputtering, co-sputtering, reactive co-sputtering, glow deposition, vacuum evaporation, chemical vapor deposition, and reactive chemical vapor deposition. The rapid quench techniques include thermal spraying and plasma spraying.

The present invention also provides an apparatus for performing the methods of making the coated electrodes of the invention on a continuous basis. The electrode is made from a roll of a web of substrate with one or more electrode-forming regions thereon. The apparatus includes means for unrolling the substrate substantially continuously into an application chamber, the chamber including at least one depositing region therein. The apparatus further includes means for depositing a coating onto at least some of said one or more electrode-forming regions. The depositing means is positioned in the application chamber. Preferably, the application chamber may be a solution bath for the solution techniques described above; a reactive chemical vapor deposition chamber; a vacuum chamber for the vapor deposition techniques described above; or, means for melting the selectively permeable material for subsequent depositing and quenching onto a substrate such as with thermal or plasma spraying.

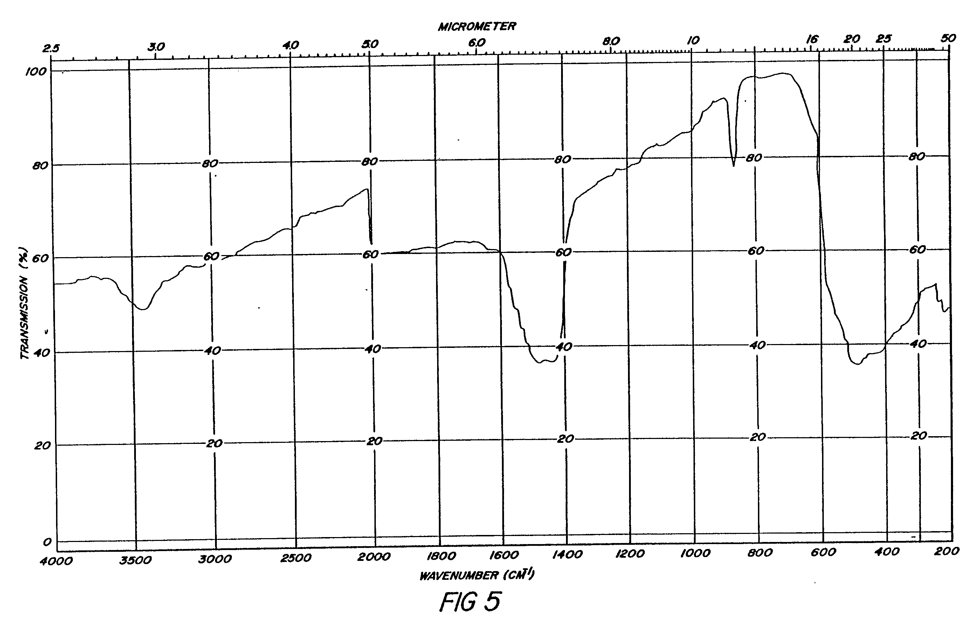

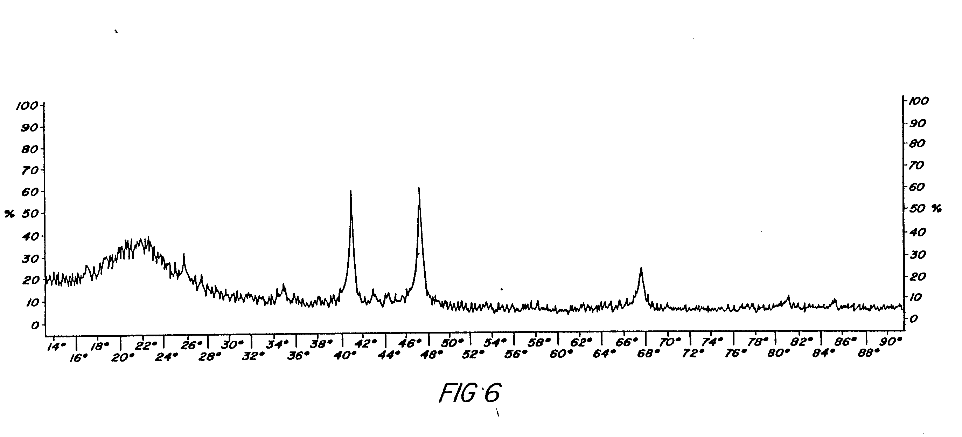

A composition of matter including the elements lithium, fluorine, and silicon also is contemplated by the present invention. The composition of matter exhibits characteristic absorption bands in the infrared region of the spectrum at the frequencies expressed in reciprocal centimeters according to Fig. 5 and the X-ray diffraction spectrum according to Fig. 6. The composition of matter is prepared by exposing lithium metal to a mixture of 18 percent $SiF_4$ in argon at one atmosphere at a temperature of 125°C. Another composition of matter is prepared by exposing potassium or sodium to a mixture of 18 percent $SiF_4$ in argon at one atmosphere at a temperature of 125°C.

Accordingly, the first object of the invention is to provide a coating for an electrode which electrochemically releases an active species to an electrolyte, the coating characterized by a selectively permeable material which allows diffusion of the active species through the coating during operation of the

4

cell while providing a substantially impervious barrier to the electrolyte.

A second object of the invention is to provide an electrode for use in an electrochemical cell having an electrochemically active species and an electrolyte. This electrode is characterized by a means for storing the active species and subsequently discharging at least a portion of the stored active species to provide a supply of electrons, a surface adapted to be operatively associated with the electrolyte in the cell, and a coating on the surface, with a coating including a selectively permeable material which allows diffusion of said active species to the coating during operation of the cell while providing a substantially impervious barrier to the electrolyte.

A third object of the invention is to provide an electrochemical cell characterized by an electrochemically active species, an anode means for storing the active species and subsequently discharging at least a portion of the stored active species to provide a supply of electrons, with the anode means having an operative surface, and a coating on the surface. Furthermore, the electrochemical cell comprises a cathode means for providing diffusion of the active species between the anode means and the cathode means during operation of the cell, a cathode means operatively contacting the surface through the coating, with the cathode means including an electrolyte and the coating including a selectively permeable material which diffuses the active species through the coating during operation of the cell while providing a substantially impervious barrier to the electrolyte.

A fourth object of the invention is to provide a method of making an electrode for use in an electrochemical cell having an electrochemically active species and an electrolyte. The method is characterized by the steps of providing an electrode means for storing the active species and subsequently discharging at least a portion of the stored active species to provide a supply of electrons, the electrode having a surface adapted to be operatively associated with the electrolyte in the cell, and applying a coating to the electrode surface, the coating having a selectively permeable material which allows diffusion of the active species through the coating during the operation of the cell while providing a substantially impervious barrier to the electrolyte.

A fifth object of the invention is to provide an apparatus for making an electrode for use in an electrochemical cell having an electrolyte, the electrode made from a roll of a web of substrate with one or more electrode-forming regions thereon. The apparatus is characterized by a means for unrolling the substrate substantially continuously into an application chamber, the chamber including at least one depositing region therein, a means for depositing a coating onto at least some of the one or more electrode-forming regions, the coating comprising a selectively permeable material which allows diffusion of an electrochemically active species through the coating during electrochemical release of the active species from the electrode while providing a substantially impervious barrier to the electrolyte, and the depositing means being positioned in the application chamber.

A sixth object of the invention is characterized by a composition of matter comprising the elements lithium, fluorine, and silicon which exhibit characteristic absorption bands in the infrared region of the spectrum at the frequencies expressed in reciprocal centimeters according to Figure 5 and the X-ray diffraction pattern according to Figure 6.

A seventh object of the invention is characterized by a composition of matter prepared by exposing the lithium metal to a gaseous mixture of 18% $SiF_4$ in argon at one atmosphere and at a temperature of 125°C.

The eighth object of the invention is characterized by a composition of matter prepared by exposing potassium or sodium to a gaseous mixture of 18% $SiF_4$ in argon at one atmosphere and at a temperature of 125°C.

The preferred embodiment of this invention will now be described by way of example, with reference to the drawings accompanying this specification in which:

Fig. 1 is a block diagram of one illustrative apparatus for performing the methods of making the coated electrodes of the invention on a continuous basis;

Fig. 2 is a graph of cell voltage vs. capacity for a cell having a coated electrode of the invention compared to conventional, uncoated electrodes of the prior art;

Fig. 3 is a discharge curve plotting cell voltage vs. time for a coated lithium anode of the invention in $SOCl_2$ electrolyte compared to a conventional, uncoated anode of the prior art demonstrating the elimination of the voltage delay phenomenon; and

Fig. 4 is a discharge curve plotting cell voltage vs. time for a coated lithium anode of the invention made by a reactive chemical vapor deposition technique compared to a conventional, uncoated anode of the prior art.

Fig. 5 presents the infrared spectrum for a coating of the present invention formed by the reaction of lithium metal and $SiF_4$.

Fig. 6 presents the X-ray diffraction spectrum of a coating of the present invention formed by the reaction of lithium metal and $SiF_4$.

Generally, the present invention provides a coating for an electrode which is used in electrochemical cells having an electrochemically active species and an electrolyte. The coating allows diffusion of the active species away from the electrode and into the electrolyte during the discharge stage of the electrochemical reaction. In secondary electrochemical cells, the diffusion of the active species through the coating is reversible. The coating also provides a substantially impervious barrier to the electrolyte. The composition of the coating includes the active species and at least one electronegative element. The

5

coating may also be a compositionally disordered material with single or multiple phases. The coating may be applied through a variety of solution or vapor deposition techniques. Various cathode systems, and more particularly, electrolytes, may be used in an electrochemical cell containing an electrode having the inventive coating. The coatings of the invention provide greatly improved specific capacities, cell voltages, rate capabilities, and other electrochemical cell characteristics.

In particular, the coatings of the present invention provide a selectively permeable material which allows an active species to diffuse through the coating during operation of the cell. The term electrochemically active species is used to generally denote the form which the active material of the electrode takes upon electrochemical operation of the the electrode in a cell. Simultaneously, the coating functions as a barrier to prevent diffusion of the electrolyte through the coating so that the electrode does not come in direct physical contact with the electrolyte. Thus, the coating is selectively permeable to the diffusion of the particular active species and impervious to the diffusion of the electrolyte.

The diffusion of the active species need only be in one direction in a primary cell, i.e., from the electrode. The inventive coating may also be used on electrodes in secondary cells. Upon discharge of the electrode, the active species diffuses away from the electrode and into the electrolyte. Upon charging of the electrode, the active species diffuses from the electrolyte to the electrode. Thus, the diffusion of the active species through the coating in a secondary system is reversible.

For prolonged operational life, the coatings of the invention also must be substantially impervious to degradation by the electrolyte. Although the active species diffuses through the coating during the electrochemical reaction, the coating itself does not react with the electrolyte so that the structure of the coating remains intact. Thus, the coating interposes a physical barrier between the electrode and the electrolyte.

The composition of the inventive coating is a selectively permeable material which includes the active species and at least one electronegative element. The term electronegativity refers to the attraction of nuclei for electrons and comparisons between the electronegativity of elements are made with Pauling's electronegativity series. An electronegative element has a Pauling electronegativity value greater than 2.2. Suitable electronegative elements are fluorine, iodine, bromine, chlorine, sulfur, nitrogen, and oxygen. Compounds of these elements also may be suitable. Preferably, a coating of the invention incorporates lithium with either nitrogen or iodine.

The coatings of the present invention may include carbon or at least one amphoteric element. The term amphoteric is used to denote an element with a Pauling electronegativity value ranging between 1.5 and 2.2. Carbon need not be in elemental form; organic compounds such as polymers are suitable. Silicon and aluminum are preferred amphoteric elements. Other suitable amphoteric elements include phosphorus, boron, gallium, arsenic and zinc. The amphoteric element need not necessarily be in elemental form, and thus, compounds of these elements also may be used.

Preferably, a coating of the invention incorporates fluorine as the electronegative element, lithium as the active species, and silicon as the amphoteric element.

The coating also may contain an electropositive element incorporated in the selectively permeable material. An electropositive element has a Pauling electronegativity value less than 1.5. The electropositive element is a different element from the active species. Suitable electropositive elements include lithium, sodium, potassium, magnesium and calcium. Adding an electropositive element increases the ionic diffusion rate of the active species through the coating. Other means for increasing the diffusion rate of the active species through the coating are also contemplated.

To enhance the electrochemical characteristics of the electrode, the diffusion coefficient of the active species through the coating is preferably greater than about $10^{-10}$cm$^2$/sec.. More importantly, the coatings of the invention preferably have an ionic conductivity greater than about $10^{-6}$ ohm$^{-1}$cm$^{-1}$.

The coating of the invention may have a structure which is either a single phase crystalline material, or a compositionally disordered material. Such disordered materials have tailor made local chemical environments which are designed to improve the electrochemical performance of a coated electrode by increasing the density and/or reducing the barrier height of the diffusivity sites for the active species of the electrode. The diffusivity sites must be selective, so that the electrolyte will not be diffused through the coating.

Disordered materials are ideally suited for manipulation since they are not constrained by the symmetry of a single phase crystalline lattice or by stoichiometry. By moving away from materials having such restrictive single phase crystalline symmetry, it is possible to accomplish a significant alteration of the local structural chemical environments to selectively enhance and control the active species diffusion coefficient of the inventive materials.

The types of disordered structures which provide the local structural chemical environments for the enhanced selective diffusion characteristics contemplated by the invention include multicomponent polycrystalline materials lacking long-range compositional order, microcrystalline materials, amorphous materials or multiphase materials containing both amorphous and crystalline phases. The following list provides a classification of the spectrum of disordered structures described by the present invention:

1. Multicomponent polycrystalline materials lacking long-range compositional order.
2. Microcrystalline materials.
3. Mixtures of polycrystalline and microcrystalline phases.

4. Mixtures of polycrystalline or microcrystalline and amorphous phases.

5. Amorphous materials containing one or more amorphous phases.

In carrying the present invention into practice, the coatings described herein may be used on the surface of an electrode adapted to be operatively associated with an electrolyte in an electrochemical cell. The coated electrode may include the active species as part of the coating before operation of the cell diffuses the active species through the coating.

The electrode includes means, described below, for storing the active species and subsequently discharging at least a portion of the stored active species to provide a supply of electrons. The electrode may initially be in a charged or uncharged state. In a charged state, the active species is initially stored with the coated electrode. In an uncharged state, the active species is initially released from a counter electrode or from the electrolyte upon operation of the cell and diffuses through the coating to deposit onto the coated electrode.

The active material of an electrode that can be used with the coatings of the present invention include at least one element selected from the group consisting of Group IA, Group IB, Group IIA, Group IIB, and mixtures of the aforesaid elements with other substances such that the aforesaid elements can be electrochemically released from the mixture. Preferably, the active material of the electrode is the metal lithium. Advantageously, other Group IA elements such as sodium, and potassium are suitable. Suitable Group IIA elements are magnesium and calcium. A second preferred active material is a hydrogen storage material; other means for charging by absorbing and storing hydrogen and subsequently discharging at least a portion of the stored hydrogen to provide a supply of electrons also are contemplated.

The electrode also may consist entirely of the active material or the active material can be deposited on a supporting structure which, in turn, can be constructed of materials such as copper, steel, nickel, carbon, etc., which are advantageously electronically conductive but which are not the source of the active species. In some instances, the electrode may incorporate alloys, compounds or solutions containing the active material provided that the alloys, compounds or solutions meet the requirement that they are electronically conductive and are capable of electrochemically releasing the active species which is to be transported into the electrolyte.

A general concept of the invention is to substitute a designed barrier with the characteristics described herein in place of the passivation layer spontaneously formed by the reaction of the electrode and the electrolyte or environment which deleteriously affects many electrode systems. As applied to the electrode, the coating should be of an effective thickness and uniformity to reduce or prevent the formation of a passivation layer on the electrode surface which limits the electrochemical release of the active species.

The coating should be uniform so that areas of the electrode surface are not exposed directly to the electrolyte. Otherwise a passivation layer may form over such uncoated areas and decrease the electrochemical performance of the electrode. Furthermore, direct contact between the electrolyte and electrode provides an area for degradation of the electrode.

The thickness of the coating must be sufficient to act as a substantially impervious barrier to the diffusion of the electrolyte to the electrode. The invention contemplates, but is not limited to, a coating with a thickness not less than about $100\text{Å}$ ($10\text{nm}$) and not more than about $100,000\text{Å}$ ($10\mu\text{m}$). Advantageously, the thickness of the of coating is not less tan about $500\text{Å}$ ($50\text{nm}$) and not more than about $10,000\text{Å}$ ($1\mu$). Prefeably, the thickness of of the coating is about $1000\text{Å}$ ($100\text{nm}$). The coating preferably have ionic conductivity greater than $10^{-6}$ ohm $^{-1}\text{cm}^{-1}$ and/or a diffusion coefficient greater than $10^{-10}\text{cm}^2/\text{sec}$.

The coated electrode described above may be used as anode means in an electrochemical cell. Such anode means store the active species and subsequently discharge at least a portion of the stored active species to provide a supply of electrons. The anode means include an operative surface for the coating.

Using the coated electrode in an electrochemical cell requires cathode means for providing diffusion of the active species between the anode means and the cathode means during operation of the cell. The cathode means operatively contacts the surface through the coating. The present invention is not limited to a particular structure nor material used for the cathode means.

The cathode structure itself need not necessarily consist of a cathodic reactant. The structure may be made of materials such as carbon, copper, nickel, zinc, silver, etc., upon which or in which the cathodic reactant is deposited or impregnated. Advantageously, the cathode structure consists entirely of the cathodic reactant when it displays significant electrical conductivity. Preferably, the cathodic reactant is not admixed or diluted with an electrochemically inactive material.

The cathodic reactant may itself be dissolved or suspended directly in the electrolyte. In these embodiments, the structure of the cathode means is a current collector spaced from the anode. Often, the use of a separator is unnecessary when the electrolyte itself functions as a separator.

The cathode means includes any type or kind of cathodic reactant. The cathodic reactant may be a pure compound or any combination of compounds; a liquid or solid; and used with a liquid or solid electrolyte. Preferably, the cathodic reactants used with a lithium anode coated by the invention include: $FeS_2$, $TiS_2$, $(CF_x)_m$, and $SOCl_2$. Other suitable cathodic reactants include, but are not limited to: $MnO_2$, $MoO_3$, $V_6O_{13}$, $V_2O_5$, $CuO$, $Ag_2CrO_4$, $CuS$, $SO_2$, $SO_2Cl_2$, $I_2$ $Br_2$, $PbI_2$, $PbS$, and $S$.

An electrolyte useful in practicing the present invention must be chemically impervious to the inventive coating and cathode materials. The electrolyte must permit migration of ions from the coated anode to the cathodic reactants during the discharge of a primary or secondary cell, and vice versa, during

7

EP 0 130 049 B1

the charge cycle of a secondary cell. The term electrolyte as used in the application herein refers individually to either an ionic conductive component or a solvent or the combination of both.

Suitable electrolytes include both aqueous and nonaqueous, alkaline and acidic, organic and inorganic materials. A wide range of aprotic solvents and their mixtures can be used as nonaqueous electrolytes with the above-described anodes. Preferably, these nonaqueous solvents include dioxolane, dimethyl formamide, methyl formate, and propylene carbonate. Other suitable solvents include water, butyrolactone, dimethoxyethane, ethylene carbonate, sulfolane, and tetrahydrofuran.

Other suitable electrolytes include an ionizable salt having at least one cation moiety selected from the group of elements previously listed above and at least one anionic moiety selected from the group consisting of halides, hydroxides, sulfates, nitrates, fluoroarsenates, borofluorides, borochlorides, phosphofluorides, thiocyanates, and perchlorates.

For use with a lithium anode, preferred electrolytes include salts of lithium perchlorate, lithium tetrafluoroborate, lithium aluminum tetrachloride, and lithium hexafluorarsenate.

The concentration of the salt in the electrolyte is determined by the electrolyte conductivity and chemical reactivity. However, in most instances, concentrations between about 0.1 moles per liter and 5 moles per liter of the ionizable salt in the solvent are preferred. In addition to the foregoing electrolytes, it should be noted that some electrolytes may be used in the pure state as in the form of a solid.

The present invention contemplates several methods of applying the coating to the electrode surface described herein. These methods may be used to successively deposit several layers of the coating. Coatings of the selectively permeable material described above may be formed by atomistic, molecular, particulate, or bulk deposition techniques. Although particulate and bulk techniques are often inexpensive by comparison, atomistic or molecular deposition techniques allow for greater control over the local chemical environments to structure a selectively permeable material with the characteristics described above. Generally, three classes of methods for applying the coating can be described. This classification, however, is presented to better understand the contemplated invention and is not meant to be a limitation. These classes are solution deposition, vapor deposition and rapid quench deposition. As used in the following discussion, the term selectively permeable material refers generally to some or all of the individual elements, compounds, or components comprising the coating.

The first class of methods for applying the coating to an electrode surface includes preparing a solution of a solute and the selectively permeable material. This solution is applied to the electrode surface. The selectively permeable material is then deposited onto the electrode surface to form the coating.

The step of depositing the selectively permeable material onto the electrode surface may be done with or without an electrical bias. In one embodiment, the solute may be dried from the solution to leave the selectively permeable material as a coating on the electrode surface. In a second embodiment, subjecting the electrode to an electrical bias plates certain components of the selectively permeable material onto the electrode surface where they may react. Thus, the coating is reactively electroplated. In a third embodiment, the certain components of selectively permeable material chemically reacts with the electrode surface to form the coating.

The first class of methods for applying the coating also includes adding the selectively permeable material directly to the electrolyte contained in the electrochemical cell with the electrode. Once the electrode surface is placed in operative contact with the electrolyte, the selectively permeable material reactively deposits onto the electrode surface to form the coating. The deposition of the selectively permeable material onto the electrode surface once it is placed in operative contact with the electrolyte may take place by either a chemical reaction between the selectively permeable material and the electrode surface; or by plating certain components of the selectively permeable material onto the electrode surface by subjecting the electrode to an electrical bias so as to reactively electroplate the coating.

A second class of methods of applying the coating to the electrode can be generally defined as vapor deposition. The depositing of the selectively permeable material is accomplished by a number of conventional techniques which are carried out in a vapor environment. These techniques include sputtering, reactive sputtering, co-sputtering, reactive co-sputtering, glow discharge, vacuum evaporation, chemical vapor deposition, and reactive chemical vapor deposition.

A third class of methods of applying the coating to the electrode includes rapid quench techniques where the selectively permeable material is melted and deposited onto the electrode surface. As the selectively permeable material is deposited, it is rapidly quenched. A compositionally disordered material may be formed. Preferably, thermal or plasma spraying is used.

The methods of preparing the coatings described herein include reactively electroplating and reactive chemical vapor deposition. It is believed that such reactions are advantageously promoted by using the high mobility of the active species in the coating. Thus, the active species is diffused through the coating during its formation to react with other components of the selectively permeable material at the interface between the growing coating and solution.

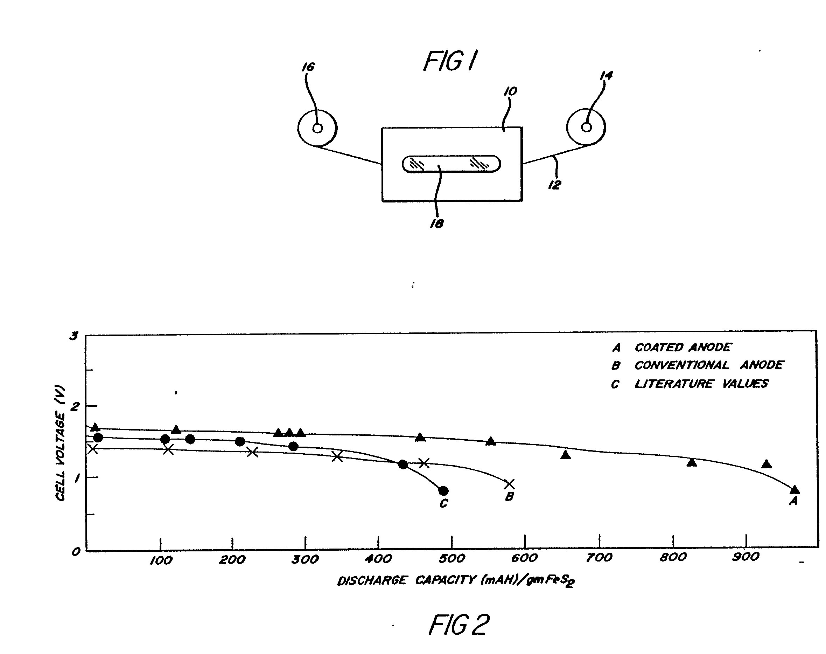

Referring to Figure 1, a block diagram of a system apparatus is illustrated for making coated electrodes of the invention, as described above. Although these processes could be performed on a batch basis, continuous processing is preferred. Thus, the vapor deposition, solution deposition, and rapid quench processes described above may be performed in an application chamber 10. A roll of a web of substrate material 12 is fed off of a payout reel 14 into and through the chamber 10 where the coating is deposited

8

onto at least some of the one or more electrode-forming regions on the substrate 12. After the electrode-forming regions have been coated, the web moves to a take-up reel 16. The deposition process may be observed through a viewing port 18 or through monitoring and control instrumentation.

Other means may be provided for unrolling the substrate substantially continuously into the application chamber 10. At least one depositing region is located in the application chamber 10.

The means for depositing said selectively permeable material may include filling the application chamber 10 with a solution to operatively contact the electrode-forming regions as the substrate 12 moves through the chamber 10. The solution includes some or all of the components of the selectively permeable material and a solute. If all of the components are present in the solute, then the coating may be deposited on said electrode-forming regions by providing means for drying the solute from the solution. In a second embodiment, means for subjecting the electrode-forming regions to an electrical bias may plate certain components of the selectively permeable material onto the substrate 12 where they react with the active species on the surface of the electrode so as to reactively electroplate the coating. In a preferred third embodiment, means are provided for chemically reacting dissolved components of the selectively permeable material with the active species at the electrode surface to form the coating.

The application chamber 10 may also be evacuated so that the means for depositing the selectively permeable material on the electrode-forming regions may include vapor deposition methods. The vapor deposition techniques contemplated by the invention are referred to by those skilled in the art as: sputtering, reactive sputtering, co-sputtering, reactive co-sputtering, glow discharge, vacuum evaporation, chemical vapor deposition, and reactive chemical vapor deposition.

The means for depositing said selectively permeable material on said electrode-forming regions may also include means for melting the selectively permeable material, means for depositing the selectively permeable material onto the electrode-forming regions, and means for quenching the selectively permeable material. Thus, the substrate 12 and application chamber 10 can be used in a fashion similar to a thermal or plasma spraying apparatus.

## Example I

Comparative tests were made between cells using coated lithium anodes of the invention and conventional, uncoated lithium anodes. A coating was prepared on a scraped lithium foil mechanically positioned on an anode platten by reactively co-sputtering an alloy of lithium and silicon (about 50 weight percent of each) in an atmosphere of about 2% fluorine/98% argon using a Mathis R.F. Sputtering Unit. The anode platten was cooled by a liquid nitrogen bath during the sputtering. The lithium foil was supplied by Foote Mineral Company of the United States of America, and was 99.9% pure. The area and thickness of the foil were about .1875 sq. in. (1.2cm$^2$) and .10 in. (2.54mm), respectively. The thickness of the coating on the anode was about 1000Å (10μm).

A cathode for the cell was made with about 100 mg. of finely ground natural iron pyrite ore (FeS$_2$). Twenty percent XC-72 carbon from the Cabot Corporation of the United States of America, and 3% dry powdered Teflon® were blended with the FeS$_2$ powder. The mix was pressed at about 1,200 psi into a nickel grid with tabs for electrical contact. The cathode formed was then cured at 190°C. to bond the mix. The active materials were balanced in such a way that a stoichiometric excess of lithium was present compared to the discharge capacity of the FeS$_2$.

Filter paper was used as a separator in the cell. The cell was assembled with the separator sandwiched between the anode and cathode. The electrolyte, 1M LiClO$_4$ in 1, 3 dioxolane, was added and the test cell mounted in a glass test vessel equipped with a standard taper joint and with glass to metal throughputs for electrical contact.

A second cell was constructed in an identical manner as described above, except that the anode was conventional, uncoated lithium foil.

- Figure 2 compares the test results from these two cells, plotting cell voltage vs. discharge capacity at room temperature. A third set of data, published in the article entitled "Ambient Temperature Secondary Li/FeS$_2$ Cells" Advanced Secondary Batteries Session, pp. 201—204, by Newman et al., also is presented in Fig. 2 for comparison. The third set of data is for a cell constructed in a similar manner as described above, except that a conventional, uncoated lithium anode is used with LiB(C$_6$H$_5$)$_4$-dioxolane-dimethoxyethane as the electrolyte.

The data clearly demonstrate that the cell capacity nearly doubled. The theoretical capacity of the cell was calculated at about 880—900 mAh/g of FeS$_2$. The capacity of the cell achieved using the coated anode was close to the theoretical capacity thus indicating much more effective utilization of the active materials. The open circuit voltage also was considerably improved over the conventional, uncoated anodes.

## Example II

A comparison of cells was made using a lithium anode coated in accordance with the present invention against a conventional, uncoated lithium in various electrolytes. Two cells were prepared as described in Example I, except for using a different electrolyte. Two additional cells were prepared as described in Example I, except that a lithium aluminum alloy (50 percent by weight) was used as the substrate foil. The following table presents the highest discharge capacity for each cell tested:

## TABLE I

| Electrolyte | Discharge Capacity (mAh/g) | | | |
|---|---|---|---|---|
| | Coated Anode | | Conventional Anode | |
| | Li | LiAl | Li | LiAl |
| LClO$_4$ in dioxolane | 967 | 884 | 492 | 178 |
| LiAsF$_6$ in MeTHF | 227 | | 185 | |

As demonstrated by these results, the coating of the present invention consistently and dramatically increases the capacity of the cells, irrespective of which electrolyte or anode composition is used.

### Example III

A comparison of rechargeable cells was made using a lithium anode prepared with a coating of the present invention and a conventional, uncoated lithium anode. Two cells were constructed identical to the cells described in Example I, except that TiS$_2$ was used instead of FeS$_2$ for the cathodic reactant. The following table presents the discharge capacity for the first three cycles of each cell:

### TABLE II

| | Cycle Discharge Capacity mAh/g | | |
|---|---|---|---|
| | 1 | 2 | 3 |
| Coated Anode | 125.4 | 93.1 | 88.5 |
| Conventional Anode | 91.7 | 72 | |

These results demonstrate that the present invention improves the cycling efficiency of the cells. Nearly two-thirds of the initial cell capacity was rechargeable.

### Example IV

Comparative tests were made between cells using coated lithium anodes of the invention and conventional uncoated lithium anodes in an SOCl$_2$ electrolyte. One cell contained a coated lithium anode prepared in a manner described in Example I. The area and thickness of the foil was about .60 square inches (3.87cm$^2$) and .10 inches (2.54mm), respectively. The thickness of the coating on the anode was about 1000Å (10μm). A cathode for the cell was made with XC—72 carbon and 3% dry powdered teflon. The mix was pressed at about 1200 psi into a nickel grid with tabs for electrical contact. The cathode formed was then cured at 100°C to bond the mix.

Filter paper was used as a separator in the cell. The electrolyte, 1.8 M LiAlCl$_4$—SOCl$_2$ was obtained from the Lithium Corporation of America and added to the test cell.

A second cell was constructed in an identical manner as described above, except that the anode was a conventional uncoated lithium foil.

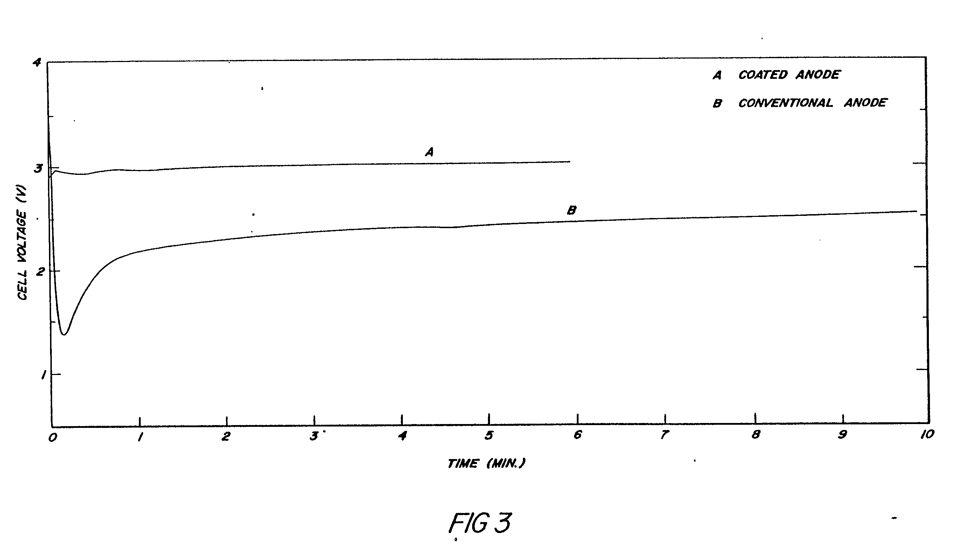

Fig. 3 compares the discharge of each cell at 20 mA. As the data clearly demonstrate, the voltage delay phenomena is eliminated by using the lithium anode coated with the present invention. This is accomplished with an improvement in operating voltage at the same drain rate.

### Example V

Lithium foil (99.9% pure) reacted with 18% SiF$_4$ gas mixed with argon in a sealed glass container at slightly less than one atmosphere total pressure. At 125°C. the lithium foil immediately started reacting gently and turned black in color, forming a coating within about 5 minutes.

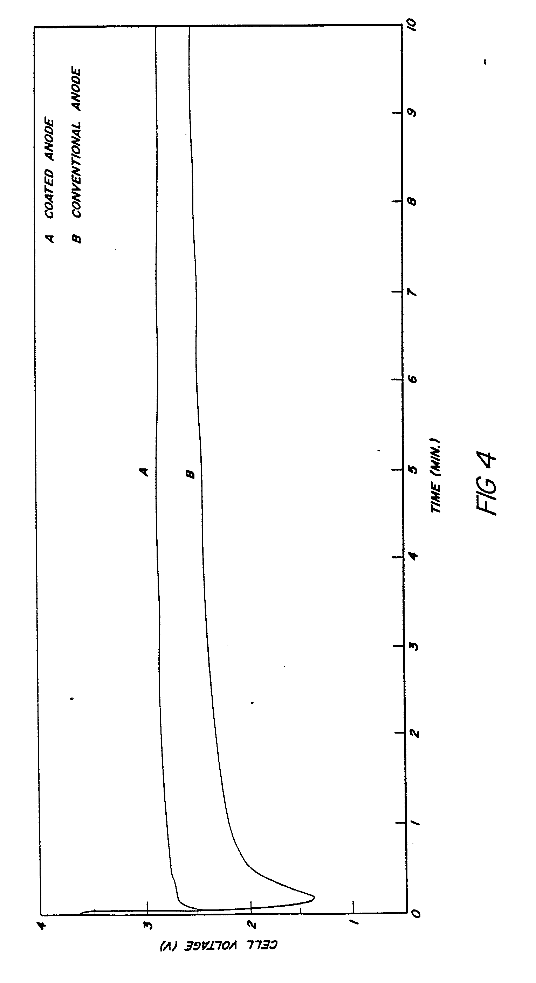

Fig. 4 compares the discharge at 20 mA. of a conventional, uncoated lithium anode with the anode described above. The data illustrate the improved electrochemical performance of the cell having the inventive coating made by the reactive chemical vapor deposition technique.

The infrared spectrum of the resultant coating appears as Fig. 5 and does not agree with the infrared spectra of Li$_2$SiF$_6$, SiF$_4$, and Na$_2$SiF$_6$ presented in the literature. The sample was prepared with finely ground KBr as a pressed pellet. The X-ray diffraction spectrum of the coating on a glass substrate appears as Fig. 6 and does not agree with the X-ray diffraction spectra of the above-identified reference compounds found in the literature.

As illustrated by these examples, a number of advantages result from substituting a designed coating for the passivating layer otherwise formed on electrodes. The coatings of the invention allow for diffusion of the active species through the coating to the electrolyte upon electrochemical release of the active species from the electrode. Simultaneously, the coating provides a substantially impervious barrier to the electrolyte. Because the electrolyte can neither diffuse through the coating nor degrade the coating to come in direct contact with the electrode, a passivation layer is not formed directly on the electrode. The phenomena of voltage delay is completely eliminated without deleterious consequences to the electrochemical performance of the cell. In fact, the electrochemical cells described herein exhibit a wide operating temperature range with improved cell capacity at various discharge rates.

Improved rate capability for several cathodic reactants has also been achieved, by the invention. Improved cell voltage and capacity demonstrate greater electrochemical efficiency with a concomitant reduction in internal heat generation. Furthermore, the coatings provide long shelf lives for the electrodes because they are protected against degradation by the electrolyte.

Secondary cells embodying the inventive concept described herein demonstrate an improved rechargeability and decreased dendrite formation. The invention avoids excessive solvent degradation. Consequently, less gassing was observed during cycling of the cells. This provides a safer environment because the cells are less prone to rupture because of pressure buildup. All of the advantages described herein have been achieved without rigorous purification of the electrolyte. Thus, cells produced in accordance with the invention are less expensive and easier to manufacture.

**Claims**

1. A coating for an electrode which coating electrochemically releases an active species to an electrolyte, said coating being characterized by a selectively permeable material which allows diffusion of said active species through the coating during operation of the cell while providing a substantially impervious barrier to the electrolyte.

2. A coating according to claim 1, further characterized by said active species being selected from hydrogen, lithium, sodium, potassium, magnesium and calcium.

3. A coating according to claim 1, further characterized by said selectively permeable material comprising said active species and at least one electronegative element selected from fluorine, iodine, bromine, chlorine, sulfur, nitrogen, and oxygen.

4. A coating according to claim 1, further characterized by said active species being lithium and said electronegative element being iodine or nitrogen.

5. A coating according to claim 1, further characterized by said selectively permeable material comprising means for increasing the diffusion of said active species through said coating.

6. A coating according to claim 5, further characterized in that said means comprises an electropositive element, incorporated in said selectively permeable material, said electropositive element being selected from lithium, sodium, potassium, magnesium, and calcium, and being different from said active species.

7. A coating according to claim 1, further characterized by said selectively permeable material comprising carbon or at least one amphoteric element.

8. A coating according to claim 7, further characterized by said amphoteric element being selected from silicon, boron, aluminum, phosphorus, arsenic, and zinc.

9. A coating according to claim 1, further characterized by said active species being lithium, said electronegative element being fluorine, and said amphoteric element being silicon.

10. A coating according to claim 1, further characterized by said coating being compositionally disordered to enhance diffusion of said active species through said coating while providing a substantially impervious barrier to said electrolyte, and wherein said disordered coating is selected from amorphous, microcrystalline, polycrystalline, and a mixture of any combination of these structures.

11. An electrode for use in an electrochemical cell having an electrochemically active species and an electrolyte, said electrode being characterized by:

means for storing said active species and subsequently discharging at least a portion of such stored active species to provide a supply of electrons;

a surface adapted to be operatively associated with said electrolyte in the cell; and

a coating according to any of claims 1 to 10 on said surface.

12. An electrochemical cell having an electrochemically active species; anode means for storing said active species and subsequently discharging at least a portion of such stored active species to provide a supply of electrons, said anode means having an operative surface; cathode means for providing diffusion of said active species between said anode means and said cathode means during operation of the cell, said cathode means operatively contacting said surface through a coating, said cathode means including an electrolyte; and a coating according to any of claims 1 to 10 on said surface.

13. An electrochemical cell according to claim 12, futher characterized by said coating further allowing reversible diffusion of said active species through the coating from the electrolyte to the electrode so that the cell is rechargeable.

14. An electrochemical cell according to claim 12, further characterized by said electrolyte comprising a salt of said active species and a solvent selected from water, butyrolactone, dimethyl formamide, ethylene carbonate, methyl formate, sulfolane, tetrahydrofuran, dioxolane, dimethoxyethane, and propylene carbonate.

15. An electrochemical cell according to claim 12, further characterized by said cathode means comprising a counter electrode spaced apart from said anode, said counter electrode including a cathodic reactant.

16. An electrochemical cell according to claim 12, further characterized by said cathode means comprising a current collector spaced apart from said anode, said electrolyte including a cathodic reactant.

17. A battery further characterized by a plurality of electrochemical cells according to claim 12.

18. A method of making an electrode according to claim 11, said method being characterized by:

providing an electrode means for storing said active species and subsequently discharging at least a portion of such stored active species to provide a supply of electrons, said electrode having a surface adapted to be operatively associated with said electrolyte in the cell; and

applying a coating according to any of claims 1 to 9 to said electrode surface.

19. A method according to claim 18, further characterized in that said step of applying said coating includes preparing a solution of said selectively permeable material in a solute, applying said solution to said electrode surface, and depositing said selectively permeable material onto said electrode surface to form said coating.

20. A method according to claim 19, further characterized in that said step of depositing said selectively permeable material includes drying said solute from said solution to leave said selectively permeable material as said coating on said electrode surface.

21. A method according to claim 19, further characterized in that said step of depositing said selectively permeable material includes plating said selectively permeable material on said electrode surface by subjecting said electrode to an electrical bias so as to reactively electroplate said coating.

22. A method according to claim 19, further characterized in that said step of depositing said selectively permeable material includes chemically reacting said selectively permeable material with said electrode surface to form said coating.

23. A method according to claim 18, further characterized by said step of applying said coating includes adding said selectively permeable material to said electrolyte, placing said electrode surface in operative contact with said electrolyte, and depositing said selectively permeable material onto said electrode surface to form said coating.

24. A method according to claim 23, further characterized by said step of depositing said selectively permeable material includes chemically reacting said selectively permeable material with said electrode surface to form said coating.

25. A method according to claim 23, further characterized by said step of depositing said selectively permeable material includes plating said selectively permeable material on said electrode surface by subjecting said electrode to an electrical bias so as to reactively electroplate said coating.

26. A method according to claim 18, further characterized by said step of applying said coating includes depositing said selectively permeable material onto said electrode surface in a vapor deposition environment and including a technique selected from, sputtering, reactive sputtering, co-sputtering, reactive co-sputtering, glow decomposition, vacuum evaporation, chemical vapor deposition, and reactive chemical vapor deposition.

27. A method according to claim 18, further characterized in that said step of applying said coating, applied successively to provide a coating of increased thickness, includes melting said selectively permeable material, depositing said selectively permeable material onto said electrode surface, and rapidly quenching said selectively permeable material.

28. A method according to claim 18, further characterized in that said step of applying said coating includes forming said coating with a structure selected from amorphous, microcrystalline, polycrystalline, and a mixture of any combination of these structures.

29. A method according to claim 18, further characterized by said step of applying said coating includes sputtering lithium onto said electrode surface in an atmosphere containing at least a partial pressure of iodine or nitrogen or a compound thereof.

30. A method according to claim 18, further characterized in that said step of applying said coating includes exposing said electrode surface to $SiF_4$, said active species being lithium, so as to deposit said coating onto said electrode surface by reactive chemical vapor deposition.

31. A method according to claim 30, further characterized in that said exposing step uses 18% $SiF_4$ mixed with argon gas at a temperature of about 125°C.

32. An apparatus for making an electrode for use in an electrochemical cell having an electrolyte, said electrode being made from a roll of a web of substrate with one or more electrode-forming regions thereon, said apparatus being characterized by:

means for unrolling said substrate substantially continuously into an application chamber, said chamber including at least one depositing region therein;

means for depositing a coating according to any of claims 1 to 9 onto at least some of said one or more electrode-forming regions, said depositing means being positioned in said application chamber.

33. An apparatus according to claim 32, further characterized by said depositing means comprising a solution, positioned in said application chamber to operatively contact said electrode forming regions, said solution including said selectively permeable material and a solute.

34. An apparatus according to any one of claims 32 or 33, further characterized by said depositing means comprising means for drying said solute from said solution to leave said selectively permeable material as said coating on said electrodeforming regions.

35. An apparatus according to any one of claims 32 or 33, further characterized by said depositing means comprising means for plating said selectively permeable material on said electrodeforming regions by subjecting said electrode-forming region to an electrical bias so as to reactively electroplate said coating.

36. An aparatus according to any one of claims 32 or 33, further characterized by said depositing means comprising means for chemically reacting said selectively permeable material with said electrode surface to form said coating.

37. An apparatus according to claim 32, further characterized in that said depositing means includes means for melting said selectively permeable material, means for depositing said selectively permeable material onto said electrodeforming regions, and means for rapidly quenching said selectively permeable material.

38. An apparatus according to claim 32, further characterized in that said depositing means comprises means for evacuating said application chamber and means for depositing said selectively permeable material onto said electrode-forming regions by vapor deposition selected from sputtering, reactive sputtering, co-sputtering, reactive co-sputtering, glow decomposition, vacuum evaporation, chemical vapor deposition, and reactive chemical vapor deposition.

39. A composition of matter characterized by the elements lithium, fluorine, and silicon; exhibiting characteristic absorption bands in the infrared region of the spectrum at the frequencies expressed in reciprocal centimeters according to Fig. 5 and the X-ray diffraction pattern according to Fig. 6.

40. A method of making a composition of matter according to claim 39 characterized by exposing lithium metal to a gaseous mixture of 18% $SiF_4$ in argon at one atmosphere and at a temperature of 125°C.

41. A method of making a composition of matter according to claim 39 characterized by exposing potassium or sodium to a gaseous mixture of 18% $SiF_4$ in argon at one atmosphere and at a temperature of 125°C°.

## Patentansprüche

1. Ein Überzug für eine Elektrode, der einen aktiven Stoff elektrochemisch an einen Elektrolyten abgibt, wobei der Überzug durch ein selektiv durchlässiges Material gekennzeichnet ist, das während des Betriebs der Speicherzelle eine Diffusion des aktiven Stoffes durch den Überzug hindurch zuläßt, während es eine im wesentlichen undurchlässige Sperre gegenüber dem Elektrolyten vorsieht.

2. Ein Überzug nach Anspruch 1, weiter dadurch gekennzeichnet, daß der aktive Stoff aus (den Elementen) Wasserstoff, Lithium, Natrium, Kalium, Magnesium und Kalzium ausgewählt ist.

3. Ein Überzug nach Anspruch 1, weiter dadurch gekennzeichnet, daß das selektiv durchlässige Material den aktiven Stoff und mindestens ein elektronegatives Element, das aus (den Elementen) Fluor, Jod, Brom, Chlor, Schwefel, Stickstoff und Sauerstoff ausgewählt ist, umfaßt.

4. Ein Überzug nach Anspruch 1, weiter dadurch gekennzeichnet, daß der aktive Stoff Lithium und das elektronegative Element Jod oder Stickstoff ist.

5. Ein Überzug nach Anspruch 1, weiter dadurch gekennzeichnet, daß das selektiv durchlässige Material Mittel zur Steigerung der Diffusion des aktiven Stoffes durch den Überzug hindurch umfaßt.

6. Ein Überzug nach Anspruch 5, weiter dadurch gekennzeichnet, daß die Mittel (zur Steigerung der Diffusion) ein elektropositives Element umfassen, das in dem selektiv durchlässigen Material enthalten ist, wobei das elektropositive Element aus Lithium, Natrium, Kalium, Magnesium und Kalzium ausgewählt ist und sich von dem aktiven Stoff unterscheidet.

7. Ein Überzug nach Anspruch 1, weiter dadurch gekennzeichnet, daß das selektiv durchlässige Material Kohlenstoff oder mindestens ein amphoteres Element umfaßt.

8. Ein Überzug nach Anspruch 7, weiter dadurch gekennzeichnet, daß das amphotere Element aus Silizium, Bor, Aluminium, Phosphor, Arsen und Zink ausgewählt ist.

9. Ein Überzug nach Anspruch 1, weiter dadurch gekennzeichnet, daß der aktive Stoff Lithium, das elektronegative Element Fluor und das amphotere Element Silizium ist.

10. Ein Überzug nach Anspruch 1, weiter dadurch gekennzeichnet, daß der Überzug bezüglich seiner Zusammensetzung ungeordnet ist, um die Diffusion des aktiven Stoffes durch den Überzug hindurch zu steigern und zugleich eine im wesentlichen undurchlässige Sperre gegenüber dem Elektrolyten zu schaffen, und daß der ungeordnete Überzug aus amorphen, mikrokristallinen, polykristallinen und einer Mischung aus irgendeiner Kombination dieser Strukturen ausgewählt ist.

11. Eine Elektrode für die Anwendung in einer elektrochemischen Zelle mit einem elektrochemisch aktiven Stoff und einem Elektrolyten, wobei die Elektrode gekennzeichnet ist durch Mittel zum Einlagern des aktiven Stoffes und nachfolgenden Abgeben mindestens eines Teils des eingelagerten aktiven Stoffes, um einen Elektronen-Fluß vorzusehen, eine Oberfläche, die mit dem Elektrolyten in der Zelle wirkverbunden werden kann, und auf dieser Fläche einen Überzug nach einem der Ansprüche 1 bis 10.

12. Eine elektrochemische Zelle mit einem elektrochemisch aktiven Stoff; Anodenmitteln zum Speichern des aktiven Stoffes und nachfolgenden Abgeben mindestens eines Teils dieses gespeicherten aktiven Stoffes, um einen Elektronen-Fluß vorzusehen, wobei die Anodenmittel eine wirksame Oberfläche aufweisen; Kathodenmitteln, um eine Diffusion des aktiven Stoffes zwischen den Anoden und den Kathodenmitteln während des Betriebes der Speicherzelle herbeizuführen, wobei die Kathodenmittel wirksam diese Oberfläche durch einen Überzug hindurch berühren und einen Elektrolyten enthalten; sowie

13

einem Überzug nach einem der Ansprüche 1 bis 10 auf der Oberfläche.

13. Eine elektrochemische Zelle nach Anspruch 12, weiter dadurch gekennzeichnet, daß der Überzug ferner eine reversible Diffusion des aktiven Stoffes durch diesen Überzug von dem Elektrolyten zu der Elektrode erlaubt, so daß die Zelle wiederaufladbar ist.

14. Eine elektrochemische Zelle nach Anspruch 12, weiter dadurch gekennzeichnet, daß der Elektrolyt ein Salz des aktiven Stoffes sowie ein aus Wasser, Butyrolacton, Dimethylformamid, Äthylenkarbonat, Methylformiat, Sulfolan, Tetrahydrofuran, Dioxolan, Dimethoxyäthan und Propylenkarbonat ausgewähltes Lösungsmittel enthält.

15. Eine elektrochemische Zelle nach Anspruch 12, weiter dadurch gekennzeichnet, daß die Kathodenmittel eine zu der Anode beabstandete Gegenelektrode umfassen, die einen kathodischen Reaktionspartner enthält.

16. Eine elektrochemische Zelle nach Anspruch 12, weiter dadurch gekennzeichnet, daß die Kathodenmittel einen zu der Anode beabstandeten Stromabnehmer (-sammler) umfassen, wobei der Elektrolyt einen kathodischen Reaktionspartner enthält.

17. Ein Akkumulator, weiter gekennzeichnet durch eine Mehrzahl von elektrochemischen Zellen nach Anspruch 12.

18. Ein Verfahren zur Herstellung einer Elektrode nach Anspruch 11, dadurch gekennzeichnet, daß Elektrodenmittel zum Speichern des aktiven Stoffes und nachfolgenden Abgeben mindestens eines Teils des gespeicherten aktiven Stoffes zur Erzeugung eines Elektronen-Flusses bereitgestellt werden, wobei die Elektrode eine Oberfläche aufweist, die mit dem Elektrolyten in der Zelle wirkverbindbar ist; und ein Überzug nach einem der Ansprüche 1 bis 9 verwendet wird.

19. Ein Verfahren nach Anspruch 18, weiter dadurch gekennzeichnet, daß der Schritt des Aufbringens des Überzuges das Zubereiten einer Lösung des selektiv durchlässigen Materials in einem gelösten Medium (Stoff), das Aufbringen dieser Lösung auf die Oberfläche der Elektrode und das Ablagern des selektiv durchlässigen Materials auf der Oberfläche der Elektrode zwecks Bildung des Überzuges einschließt.

20. Ein Verfahren nach Anspruch 19, weiter dadurch gekennzeichnet, daß der Schritt des Ablagerns des selektiv durchlässigen Materials das Trocknen des gelösten Stoffes aus der Lösung umfaßt, um das selektiv durchlässige Material als Überzug auf der Elektrode zurückzulassen.

21. Ein Verfahren nach Anspruch 19, weiter dadurch gekennzeichnet, daß der Schritt des Ablagerns des selektiv durchlässigen Materials das galvanische Aufbringen desselben auf der Oberfläche der Elektrode umfaßt, indem die Elektrode einer elektrischen Vorspannung unterworfen wird, so daß der Überzug durch galvanische Reaktion entsteht.

22. Ein Verfahren nach Anspruch 19, weiter dadurch gekennzeichnet, daß der Schritt des Ablagerns des selektiv durchlässigen Materials eine chemische Reaktion zwischen diesem Material und der Oberfläche der Elektrode zwecks Ausbildung des Überzuges umfaßt.

23. Ein Verfahren nach Anspruch 18, weiter dadurch gekennzeichnet, daß der Schritt des Aufbringens des Überzuges das Hinzufügen des selektiv durchlässigen Materials zu dem Elektrolyten, das In-Wirkberührung-bringen der Oberfläche der Elektrode mit dem Elektrolyten und das Ablagern des selektiv durchlässigen Materials auf der Oberfläche der Elektrode zwecks Ausbildung des Überzuges umfaßt.

24. Ein Verfahren nach Anspruch 23, weiter dadurch gekennzeichnet, daß der Schritt des Aufbringens des selektiv durchlässigen Materials das chemische Reagieren des selektiv durchlässigen Materials mit der Oberfläche der Elektrode zur Ausbildung des Überzuges umfaßt.

25. Ein Verfahren nach Anspruch 23, weiter dadurch gekennzeichnet, daß der Schritt des Ablagerns des selektiv durchlässigen Materials das Beschichten der Oberfläche mit diesem Material umfaßt, indem eine elektrische Vorspannung an die Elektrode angelegt wird, so daß der Überzug durch galvanische Reaktion entsteht.

26. Ein Verfahren nach Anspruch 18, weiter dadurch gekennzeichnet, daß der Schritt des Aufbringens des Überzuges das Ablagern des selektiv durchlässigen Materials auf der Oberfläche der Elektrode in einer Dampf-Ablagerungsumgebung und eine Technik umfaßt, die aus Sputtern, reaktivem Sputtern, Co-Sputtern (gemeinsamem Sputtern), reaktivem Co-Sputtern, Auflösung durch Glühen, Vakuum-Aufdampfen, chemischem Dampfablagern (Aufdampfen) und reaktivem chemischem Aufdampfen ausgewählt ist.

27. Ein Verfahren nach Anspruch 18, weiter dadurch gekennzeichnet, daß der Schritt des Aufbringens des Überzuges, der in Folgeschritten zwecks Erzielung eines Überzuges höherer Stärke angewendet wird, das Schmelzen des selektiv durchlässigen Materials, das Ablagern desselben auf der Oberfläche der Elektrode und das schnelle Abschrecken des selektiv durchlässigen Materials umfaßt.

28. Verfahren nach Anspruch 18, weiter dadurch gekennzeichnet, daß der Schritt des Aufbringens des Überzuges das Ausbilden desselben mit einer Struktur, die aus amorphen, mikrokristallinen, polykristallinen und einer Mischung aus einer Kombination dieser Strukturen gewählt ist, umfaßt.

29. Ein Verfahren nach Anspruch 18, weiter dadurch gekennzeichnet, daß der Schritt des Aufbringens des Überzuges das Sputtern von Lithium auf die Oberfläche der Elektrode in einer Atmosphäre umfaßt, die mindestens einen Partialdruck an Jod oder Stickstoff oder eine Verbindung derselben unter Partialdruck umfaßt.

30. Ein Verfahren nach Anspruch 18, weiter dadurch gekennzeichnet, daß der Schritt des Aufbringens des Überzuges umfaßt, daß die Oberfläche der Elektrode SiF₄ ausgesetzt wird, wobei der aktive Stoff Lithium ist, so daß der Überzug durch reaktive chemische Aufdampfung auf die Oberfläche der Elektrode aufgebracht wird.

31. Ein Verfahren nach Anspruch 30, weiter dadurch gekennzeichnet, daß der Schritt des Aussetzens unter Verwendung einer 18-prozentigen, mit Argon gemischten SiF₄-Verbindung bei einer Temperatur von ungefähr 125°C erfolgt.

32. Eine Vorrichtung zur Herstellung einer Elektrode für die Anwendung in einer elektrochemischen Zelle mit einem Elekrolyten, wobei die Elektrode aus einer aufgerollten Substratbahn mit einem oder mehreren elektrodenbildenden Bereich bzw. Bereichen gefertigt ist, gekennzeichnet durch Mittel zum im wesentlichen fortlaufenden Abrollen des Substrates in eine Einsatzkammer, wobei diese mindestens eine Ablagerungszone enthält; Mittel zum Ablagern eines Überzuges nach einem der Ansprüche 1 bis 9 auf mindestens einem oder mehreren der elektrodenbildenden Bereiche, wobei die Mittel zum Ablagern in dieser Einsatzkammer angeordnet sind.

33. Eine Vorrichtung nach Anspruch 32, weiter dadurch gekennzeichnet, daß die Mittel zum Ablagern eine Lösung umfassen, die in der Einsatzkammer angeordnet sind, um einen wirksamen Kontakt mit den elektrodenbildenden Bereichen einzugehen, wobei die Lösung das selektiv durchlässige Material und einen gelösten Stoff enthält.

34. Eine Vorrichtung nach Anspruch 32 oder 33, weiter dadurch gekennzeichnet, daß die Mittel zum Ablagern Mittel zum Ausfällen (Trocknen) des gelösten Stoffes aus der Lösung umfassen, um das selektiv durchlässige Material als Überzug auf dem elektrodenbildenden Bereich zurückzulassen.

35. Eine Vorrichtung nach Anspruch 32 oder 33, weiter dadurch gekennzeichnet, daß die Mittel zum Ablagern Mittel zum Beschichten des selektiv durchlässigen Materials in den elektrodenbildenden Bereichen dadurch umfaßt, daß diese elektrodenbildenden Bereiche einer elektrischen Vorspannung ausgesetzt werden, so daß der Überzug durch galvanische Reaktion entsteht.

36. Eine Vorrichtung nach Anspruch 32 oder 33, weiter dadurch gekennzeichnet, daß die Mittel zum Ablagern Mittel umfassen, die den Überzug durch chemische Reaktion des selektiv durchlässigen Materials mit der Oberfläche der Elektrode ausbilden.

37. Eine Vorrichtung nach Anspruch 32, weiter dadurch gekennzeichnet, daß die Mittel zum Ablagern Mittel zum Schmelzen des selektiv durchlässigen Materials, Mittel zum Ablagern des selektiv durchlässigen Materials auf den elektrodenbildenden Bereichen und Mittel zum schnellen Abschrecken des selektiv durchlässigen Materials umfassen.

38. Eine Vorrichtung nach Anspruch 32, weiter dadurch gekennzeichnet, daß die Mittel zum Ablagern Mittel zum Evakuieren der Einsatzkammer und Mittel zum Ablagern des selektiv durchlässigen Materials auf den elektrodenbildenden Bereichen durch Aufdampfen umfaßt, wobei dieses aus Sputtern, reaktivem Sputtern, Co-(gemeinsamem) Sputtern, reaktivem Co-Sputtern, Glüh-Auflösen, Vakuum-Bedampfen, chemischem Aufdampfen und reaktivem chemischem Aufdampfen ausgewählt ist.

39. Eine Stoff-Zusammensetzung, gekennzeichnet durch die Elemente Lithium, Fluor und Silizium, die charakteristische Absorptionsbänder im Infrarotbereich des Spektrums bei Frequenzen aufweisen, die in Fig. 5 in $CM^{-1}$ und deren Röntgenstrahl-Beugungsbild in Fig. 6 wiedergegeben sind.

40. Ein Verfahren zur Herstellung einer Stoff-Zusammensetzung nach Anspruch 39, weiter dadurch gekennzeichnet, daß das Lithium-Metall einer Gasmischung von 18 % SiF₄ in Argon bei einer Atmosphäre Druck und einer Temperatur von 125°C ausgesetzt wird.

41. Ein Verfahren zur Herstellung einer Stoff-Zusammensetzung nach Anspruch 39, weiter dadurch gekennzeichnet, daß Kalium oder Natrium einer gasförmigen Mischung aus 18 % SiF₄ in Argon bei einer Atmosphäre Druck und einer Temperatur von 125°C ausgesetzt wird.

## Revendications

1. Revêtement destiné à une électrode, ce revêtement libérant électrochimiquement une espèce active destinée à un électrolyte, le revêtement étant caractérisé par une matière sélectivement perméable qui permet la diffusion de l'espèce active à travers le revêtement pendant le fonctionnement de la cellule tout en formant une barrière pratiquement imperméable à l'électrolyte.

2. Revêtement selon la revendication 1, caractérisé en outre en ce que l'espèce active est choisie parmi l'hydrogène, le lithium, le sodium, le potassium, le magnésium et le calcium.

3. Revêtement selon la revendication 1, caractérisé en outre en ce que la matière sélectivement perméable contient l'espèce active et au moins un élément électronégatif choisi parmi le fluor, l'iode, le brome, le chlore, le soufre, l'azote et l'oxygène.

4. Revêtement selon la revendication 1, caractérisé en outre en ce que l'espèce active est le lithium et l'élément électronégatif est l'iode ou l'azote.

5. Revêtement selon la revendication 1, caractérisé en ce que la matière sélectivement perméable comporte un dispositif destiné à accrôître la diffusion de l'espèce active à travers le revêtement.

6. Revêtement selon la revendication 5, caractérisé en outre en ce que ledit dispositif est un élément électropositif incorporé à la matière sélectivement perméable, l'élément électropositif étant choisi parmi le lithium, le sodium, le potassium, le magnésium et le calcium et étant différent de l'espèce active.

7. Revêtement selon la revendication 1, caractérisé en outre en ce que la matière sélectivement

EP 0 130 049 B1

perméable contient du carbone ou au moins un élément amphotère.

8. Revêtement selon la revendication 7, caractérisé en outre en ce que l'élément amphotère est choisi parmi le silicium, le bore, l'aluminium, le phosphore, l'arsenic et le zinc.

9. Revêtement selon la revendication 1, caractérisé en outre en ce que l'espèce active est le lithium, l'élément électronégatif est le fluor, et l'élément amphotère est le silicium.

10. Revêtement selon la revendication 1, caractérisé en outre en ce que le revêtement présente un désordre de composition destiné à accroître la diffusion de l'espèce active à travers le revêtement tout en formant une barrière sensiblement imperméable à l'électrolyte, et dans lequel le revêtement désordonné est choisi parmi les structures amorphe, microcristalline, polycristalline et les mélanges en combinaison quelconque de ces structures.

11. Electrode destinée à être utilisée dans une cellule électrochimique ayant une espèce électrochimiquement active et un électrolyte, l'électrode étant caractérisée par: un dispositif de stockage de l'espèce active et de décharge ultérieure d'une partie au moins de l'espèce active stockée afin qu'elle forme une source d'électrons, une surface destinée à être associée à l'électrolyte présent dans la cellule pendant le fonctionnement, et un revêtement selon l'une quelconque des revendications 1 à 10, placé sur ladite surface.

12. Cellule électrochimique ayant une espèce électrochimiquement active, un dispositif à anode destiné a stocker l'espèce active et à décharger ultérieurement une partie au moins de l'espèce active stockée afin qu'elle forme une source d'électrons, le dispositif à anode ayant une surface de travail, un dispositif à cathode destiné à assurer la diffusion de l'espèce active entre le dispositif à anode et le dispositif à cathode pendant le fonctionnement de la cellule, le dispositif à cathode étant au contact de ladite surface par l'intermédiaire du revêtement pendant le fonctionnement, le dispositif à cathode comprenant un électrolyte, et un revêtement selon l'une quelconque des revendications 1 à 10 placé sur la surface.

13. Cellule électrochimique selon la revendication 12, caractérisée en outre en ce que le revêtement permet en outre une diffusion réversible de l'espèce active à travers le revêtement de l'électrolyte vers l'électrode afin que la cellule soit rechargeable.

14. Cellule électrochimique selon la revendication 12, caractérisée en outre en ce que l'électrolyte contient un sel de l'espèce active et un solvant choisi parmi l'eau, la butyrolactone, le diméthylformamide, le carbonate d'éthylène, le formiate de méthyle, le sulfolane, le tétrahydrofuranne, le dioxolanne, le diméthoxyéthane, et le carbonate de propylène.

15. Cellule électrochimique selon la revendication 12, caractérisée en outre en ce que le dispositif à cathode comporte une électrode auxiliaire placée à distance de l'anode, l'électrode auxiliaire contenant un réactif cathodique.

16. Cellule électrochimique selon la revendication 12, caractérisée en outre en ce que le dispositif à cathode comporte un collecteur de courant placé à distance de l'anode, l'électrolyte contenant un réactif cathodique.

17. Batterie, caractérisée par plusieurs cellules électrochimiques selon la revendication 12.

18. Procédé de fabrication d'une électrode selon la revendication 11, le procédé étant caractérisé en ce qu'il comprend: la réalisation d'un dispositif à électrode destiné à stocker l'espèce active puis à décharger une partie au moins de l'espèce active stockée afin qu'elle forme une source d'électrons, l'électrode ayant une surface destinée à être associée à l'électrolyte présent dans la cellule pendant le fonctionnement, et l'application d'un revêtement selon l'une quelconque des revendications 1 à 9 à la surface de l'électrode.

19. Procédé selon la revendication 18, caractérisé en outre en ce que l'étape d'application du revêtement comprend la préparation d'une solution de la matière sélectivement perméable, dans un soluté, l'application de la solution à la surface de l'électrode, et le dépôt de la matière sélectivement perméable à la surface de l'électrode afin que le revêtement soit formé.

20. Procédé selon la revendication 19, caractérisé en outre en ce que l'étape de dépôt de la matière sélectivement perméable comprend le séchage du soluté de la solution afin que la matière sélectivement perméable reste sous forme d'un revêtement à la surface de l'électrode.

21. Procédé selon la revendication 19, caractérisé en outre en ce que l'étape de dépôt de la matière sélectivement perméable comprend le dépôt à la surface de l'électrode de la matière sélectivement perméable par application à l'électrode d'une polarisation électrique afin que le revêtement soit formé par électrodéposition réactive.

22. Procédé selon la revendication 19, caractérisé en outre en ce que l'étape de dépôt de la matière sélectivement perméable comprend la réaction chimique de la matière sélectivement perméable avec la surface de l'électrode afin que le revêtement soit formé.

23. Procédé selon la revendication 18, caractérisé en outre en ce que l'étape d'application du revêtement comprend l'addition de la matière sélectivement perméable à l'électrolyte, la disposition de la surface d'électrode au contact de l'électrolyte, et le dépôt de la matière sélectivement perméable à la surface de l'électrode afin que le revêtement soit formé.

24. Procédé selon la revendication 23, caractérisé en outre en ce que l'étape de dépôt de la matière sélectivement perméable comprend la réaction chimique de la matière sélectivement perméable avec la surface de l'électrode afin que le revêtement soit formé.

25. Procédé selon la revendication 23, caractérisé en outre en ce que l'étape de dépôt de la matière

16

sélectivement perméable comprend le dépôt à la surface de l'électrode de la matière sélectivement perméable par application à l'électrode d'une polarisation électrique afin que le revêtement se forme par électrodéposition réactive.

26. Procédé selon la revendication 18, caractérisé en outre en ce que l'étape d'application du revêtement comprend le dépôt de la matière sélectivement perméable à la surface de l'électrode dans des conditions de dépôt en phase vapeur, et l'utilisation d'une technique choisie parmi la pulvérisation cathodique, la pulvérisation cathodique réactive, la pulvérisation cathodique simultanée, la pulvérisation cathodique réactive simultanée, la décomposition par décharge luminescente, l'évaporation sous vide, le dépôt chimique en phase vapeur et le dépôt chimique réactif en phase vapeur.

27. Procédé selon la revendication 18, caractérisé en outre en ce que l'étape d'application du revêtement, utilisée successivement pour la formation d'un revêtement d'épaisseur accrue, comprend la fusion de la matière sélectivement perméable, le dépôt de la matière sélectivement perméable sur la surface de l'électrode, et le refroidissement rapide de la matière sélectivement perméable.

28. Procédé selon la revendication 18, caractérisé en outre en ce que l'étape d'application du revêtement comprend la formation du revêtement avec une structure choisie parmi les structures amorphe, microcristalline, polycristalline, et un mélange d'une combinaison quelconque de ces structures.

29. Procédé selon la revendication 18, caractérisé en outre en ce que l'étape d'application du revêtement comprend la pulvérisation cathodique de lithium à la surface de l'électrode en atmosphère contenant au moins une certaine pression partielle d'iode ou d'azote ou d'un de leurs composés.

30. Procédé selon la revendication 18, caractérisé en outre en ce que l'étape d'application du revêtement comprend l'exposition de la surface d'électrode à $SiF_4$, l'espèce active étant le lithium, afin que le revêtement soit déposé à la surface de l'électrode par dépôt chimique réactif en phase vapeur.

31. Procédé selon la revendication 30, caractérisé en outre en ce que l'étape d'exposition utilise 18 % de $SiF_4$ mélangé à de l'argon gazeux à une température d'environ 125°C.

32. Appareil de fabrication d'une électrode destinée à être utilisée dans une cellule électrochimique ayant un électrolyte, l'électrode étant réalisée à partir d'un rouleau d'une feuille continue d'un substrat ayant une ou plusieurs régions de formation d'électrode, l'appareil étant caractérisé par: un dispositif destiné à dérouler le substrat de manière pratiquement continue afin qu'il pénètre dans une chambre d'application, la chambre contenant au moins une région de dépôt, et un dispositif de dépôt d'un revêtement selon l'une quelconque des revendications 1 à 9 sur certaines au moins de l'une au moins des régions de formation d'électrode, le dispositif de dépôt étant placé dans la chambre d'application.

33. Appareil selon la revendication 32, caractérisé en outre en ce que le dispositif de dépôt contient une solution, placée dans la chambre d'application et destinée à être au contact des régions de formation d'électrode, la solution contenant la matière sélectivement perméable et un soluté.

34. Appareil selon l'une des revendications 32 et 33, caractérisé en outre en ce que le dispositif de dépôt comporte un dispositif destiné à sécher le soluté de la solution afin que la matière sélectivement perméable reste sous forme d'un revêtement sur les régions de formation d'électrode.

35. Appareil selon l'une des revendications 32 et 33, caractérisé en outre en ce que le dispositif de dépôt comporte un dispositif destiné à revêtir les régions de formation d'électrode de la matière sélectivement perméable par application, à la région de formation d'électrode, d'une polarisation électrique afin que le revêtement soit formé par électrodéposition réactive.

36. Appareil selon l'une des revendications 32 et 33, caractérisé en outre en ce que le dispositif de dépôt comporte un dispositif destiné à faire réagir chimiquement la matière sélectivement perméable et la surface de l'électrode afin que le revêtement se forme.

37. Appareil selon la revendication 32, caractérisé en outre en ce que le dispositif de dépôt comporte un dispositif destiné à faire fondre la matière sélectivement perméable, un dispositif de dépôt de la matière sélectivement perméable sur les régions de formation d'électrode, et un dispositif destiné à refroidir rapidement la matière sélectivement perméable.

38. Appareil selon la revendication 32, caractérisé en outre en ce que le dispositif de dépôt comporte un dispositif destiné à évacuer la chambre d'application et un dispositif destiné à déposer la matière sélectivement perméable sur les régions de formation d'électrode par dépôt en phase vapeur choisi parmi la pulvérisation cathodique, la pulvérisation cathodique réactive, la pulvérisation cathodique simultanée, la pulvérisation cathodique réactive simultanée, la décomposition par décharge luminescente, l'évaporation sous vide, le dépôt en phase vapeur et le dépôt chimique réactif en phase vapeur.

39. Composition de matière caractérisée par les éléments lithium, fluor et silicium, et présentant des bandes caractéristiques d'absorption, dans la région infra-rouge du spectre, aux fréquences, exprimées en inverse du centimètre, indiqués sur la figure 5, et un diagramme de diffraction des rayons X représenté sur la figure 6.

40. Procédé de fabrication d'une composition de matière selon la revendication 39, caractérisé par l'exposition de lithium métallique à un mélange gazeux de 18 % de $SiF_4$ dans de l'argon à une atmosphère et à une température de 125 °C.

41. Procédé de fabrication d'une composition de matière selon la revendication 39, caractérisé par l'exposition de potassium ou de sodium à un mélange gazeux de 18 % de $SiF_4$ dans de l'argon à une atmosphère et à une température de 125°C.

EP 0 130 049 B1

## FIG 1

## FIG 2

A   COATED ANODE
B   CONVENTIONAL ANODE
C   LITERATURE VALUES

CELL VOLTAGE (V)

DISCHARGE CAPACITY (mAH)/gm FeS₂

FIG 3

A COATED ANODE

B CONVENTIONAL ANODE

TIME (MIN.)

CELL VOLTAGE (V)

FIG 4

EP 0 130 049 B1

FIG 5

FIG. 6